(19) Europäisches Patentamt
European Patent Office
Office européen des brevets

(11) **EP 2 427 513 B1**

(12) **FASCICULE DE BREVET EUROPEEN**

(45) Date de publication et mention de la délivrance du brevet:
**10.02.2016 Bulletin 2016/06**

(51) Int Cl.:
*C08L 71/03* *(2006.01)*    *C08J 3/24* *(2006.01)*
*H01M 8/08* *(2006.01)*    *H01M 12/06* *(2006.01)*
*C08J 5/22* *(2006.01)*

(21) Numéro de dépôt: **10727091.0**

(22) Date de dépôt: **04.05.2010**

(86) Numéro de dépôt international:
**PCT/FR2010/050846**

(87) Numéro de publication internationale:
**WO 2010/128242 (11.11.2010 Gazette 2010/45)**

(54) **RESEAU INTERPENETRE DE POLYMERES ECHANGEUR D'ANIONS, SON PROCEDE DE FABRICATION ET SON UTILISATION**

INTERPENETRIERENDES ANIONENAUSTAUSCHPOLYMERNETZWERK, HERSTELLUNGSVERFAHREN UND VERWENDUNG

INTERPENETRATING NETWORK OF ANION-EXCHANGE POLYMERS, PRODUCTION METHOD THEREOF AND USE OF SAME

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité:  **06.05.2009   FR 0953021**

(43) Date de publication de la demande:
**14.03.2012   Bulletin 2012/11**

(73) Titulaires:
• **Electricité de France**
  **75008 Paris (FR)**
• **Université de Cergy-Pontoise**
  **95011 Cergy-Pontoise Cedex (FR)**

(72) Inventeurs:
• **STEVENS, Philippe**
  **F-77940 Noisy Rudignon (FR)**
• **GHAMOUSS, Fouad**
  **F-37000 TOURS (FR)**
• **FICHET, Odile**
  **F-78300 Poissy (FR)**
• **SARRAZIN, Christian**
  **F-91370 Verriere Le Buisson (FR)**

(74) Mandataire: **Cabinet Plasseraud**
  **52, rue de la Victoire**
  **75440 Paris Cedex 09 (FR)**

(56) Documents cités:
**WO-A-2006/016068**

• **HAN X ET AL: "POLYEPICHLOROHYDRIN POLYURETHANE/POLY(METHYL METHACRYLATE) INTERPENETRATING POLYMER NETWORKS" POLYMERS FOR ADVANCED TECHNOLOGIES, WILEY & SONS, BOGNOR REGIS, GB, vol. 7, no. 4, 1 avril 1996 (1996-04-01), pages 315-322, XP000591930 ISSN: 1042-7147**

**Description**

La présente invention concerne un procédé de fabrication d'un matériau polymère échangeur d'anions ayant une structure de type réseau interpénétré de polymères (RIP) ou de type réseau semi-interpénétré de polymères (semi-RIP), le matériau polymère obtenu par ce procédé et son utilisation dans des dispositifs électrochimiques, au contact d'une électrode à air.

De nombreux travaux ont été effectués depuis plusieurs décennies pour la mise au point et l'optimisation d'électrodes à air permettant de réaliser des générateurs électrochimiques de type métal-air, connus pour leurs énergies massiques élevées, pouvant atteindre plusieurs centaines de Wh/kg.

Les électrodes à air sont également utilisées dans des piles à combustible alcalines qui sont particulièrement avantageuses par rapport à d'autres systèmes en raison des cinétiques réactionnelles élevées au niveau des électrodes.

Une électrode à air permet d'utiliser en tant qu'agent oxydant pour la réaction électrochimique l'air de l'atmosphère, disponible en quantité illimitée n'importe où et à tout moment.

Une électrode à air est une structure solide poreuse en contact avec l'électrolyte liquide, qui est généralement une solution alcaline. L'interface entre l'électrode à air et l'électrolyte liquide est une interface dite « à triple contact » où sont présents simultanément la matière solide active de l'électrode, l'oxydant gazeux (air) et l'électrolyte liquide. Cette interface à triple contact a toujours posé de nombreuses difficultés liées en particulier à la dégradation progressive, même hors fonctionnement, de l'électrode à air, en particulier lorsque l'électrolyte liquide est une solution alcaline concentrée, telle qu'une solution plusieurs fois molaires d'hydroxyde de sodium, de potassium ou de lithium.

Les inconvénients des électrodes à air dans des piles à combustible alcalines sont exposés par exemple dans l'article bibliographique de G.F. McLean et al., intitulé « An assessment of alkaline fuel cell technology », International Journal of Hydrogen Energy 27 (2002), 507 - 526 :

- Ces électrodes subissent un mouillage progressif de leur structure poreuse jusqu'à leur noyage qui les rend inopérantes. Cette évolution est accélérée lors du fonctionnement de la pile à combustible ou de l'accumulateur ;
- Sur le long terme, le gaz carbonique présent dans l'air diffuse vers et se dissout dans la solution alcaline formant l'électrolyte, sous forme d'anion carbonate qui précipite en présence des cations alcalins (Na, K, Li). On observe ainsi une carbonatation progressive et inévitable de l'électrolyte ;
- Les carbonates se forment principalement à l'interface liquide/solide poreux et favorisent le phénomène de noyage mentionné ci-dessus ;

- La précipitation des carbonates détruit progressivement la structure de l'électrode à air et réduit considérablement les cinétiques de transfert de charge au point triple ce qui finit par rendre l'électrode inopérante.

Le but de la présente invention a été de mettre au point des matériaux polymères cationiques conducteurs d'anions, susceptibles d'être interposés entre l'électrode à air et l'électrolyte alcalin liquide ou bien de remplacer ce dernier, afin de réduire substantiellement voire même de supprimer la carbonatation de l'électrolyte solide et la dégradation de l'électrode à air qui en résulte.

De tels matériaux devraient être utilisables dans des piles à combustible alcalines et les accumulateurs de type métal-air, soit en tant qu'électrolyte solide, soit en tant que membrane séparant l'électrode à air de l'électrolyte liquide alcalin.

La Demanderesse a proposé dans la demande internationale WO 2006/016068 un matériau polymère organique réticulé, notamment en tant qu'électrolyte solide conducteur d'anions dans des piles à combustible alcalines. Le matériau polymère décrit dans cette demande est obtenu par substitution nucléophile entre un polymère linéaire halogéné, tel que la polyépichlorhydrine, et une combinaison d'au moins une diamine tertiaire et d'au moins une monoamine tertiaire ou secondaire. La réaction entre les fonctions amine tertiaire et les fonctions chlorées du polymère aboutit à la formation de fonctions ammonium quaternaire responsables du pouvoir conducteur d'anions du matériau polymère obtenu. Par ailleurs, la réaction des deux fonctions amine tertiaire du réactif bifonctionnel (diamine tertiaire) aboutit à la réticulation du polymère et à la formation d'un réseau tridimensionnel insoluble.

Toutefois, ce matériau conducteur anionique réticulé à base de polyépichlorhydrine à groupes ammonium quaternaire n'est pas stable dans les solutions alcalines concentrées. Par ailleurs, il n'est pas autosupporté et, pour l'obtenir sous forme de membrane manipulable de grande taille, il est nécessaire de le synthétiser sur un support ou dans une structure poreuse ou fibreuse, par exemple un textile non tissé en polypropylène.

La Demanderesse, dans le cadre de ses recherches visant à mettre au point des matériaux organiques conducteurs d'anions améliorés, susceptibles d'être utilisés dans des piles à combustible ou des accumulateurs afin de réduire la dégradation des électrodes à air, a découvert qu'il était possible de surmonter les inconvénients décrits ci-dessus, en incorporant un système polymérique tel que décrit dans WO 2006/016068 dans un réseau de type « Réseau Interpénétré de Polymères » (RIP, ou IPN de l'anglais *Interpenetrating Polymer Network*) ou de type « Réseau Semi-Interpénétré de Polymères » (Semi-RIP).

Un Réseau Interpénétré de Polymères (RIP) est un système polymérique comprenant au moins deux réseaux de polymères dont l'un au moins a été synthétisé en présence de l'autre, sans toutefois être liés l'un à l'autre par des liaisons covalentes, et qui ne peuvent être séparés l'un de l'autre sans rupture de liaisons chimiques (IUPAC Compendium of Chemical Terminology, 2eme édition, 1997).

Un Réseau Semi-Interpénétré de Polymères (semi RIP) diffère d'un RIP par le fait qu'un des au moins deux polymères présents ne forme pas un réseau tridimensionnel, c'est-à-dire n'est pas réticulé, mais est un polymère linéaire ou ramifié. Du fait de l'absence de réticulation du deuxième système polymérique, celui-ci peut être séparé du premier par extraction.

La présente invention a par conséquent pour objet un procédé de fabrication d'un matériau polymère échangeur d'anions ayant une structure de type réseau interpénétré de polymères (RIP) ou de type réseau semi-interpénétré de polymères (Semi-RIP), ledit procédé comprenant les étapes successives suivantes :

(A) préparation d'une solution réactionnelle homogène comprenant, dans un solvant organique approprié,

(a) au moins un polymère organique porteur de groupes halogénés réactifs,
(b) au moins une diamine tertiaire,
(c) au moins un monomère comportant une insaturation éthylénique polymérisable par polymérisation radicalaire, et
(d) éventuellement, au moins un agent de réticulation comportant au moins deux insaturations éthyléniques polymérisables par polymérisation radicalaire, et
(e) au moins un amorceur de polymérisation radicalaire,

(B) chauffage de la solution préparée à l'étape (A) jusqu'à une température et pendant une durée suffisantes pour permettre à la fois une réaction de substitution nucléophile entre les composants (a) et (b) et une réaction de copolymérisation radicalaire des composants (c) et éventuellement (d), amorcée par le composant (e).

Le procédé de la présente invention comprend ainsi la mise en oeuvre simultanée de deux réactions qui n'interfèrent pas l'une avec l'autre :

- une réaction de substitution nucléophile entre le polymère organique halogéné et la diamine tertiaire aboutissant à la formation d'un réseau polymère tridimensionnel, réticulé, insoluble, porteur de groupes ammonium quaternaire, et
- une réaction de polymérisation radicalaire des monomères et éventuellement de l'agent de réticulation, amorcée par l'amorceur radicalaire, et qui aboutit à la formation d'un deuxième réseau polymère entremêlé avec le premier. Lorsque le système contient une quantité suffisante d'un agent de réticulation (d), ce deuxième réseau polymère est tridimensionnel, réticulé et insoluble.

Dans un mode de réalisation préféré de l'invention, le mélange réactionnel contient un agent de réticulation (d) et le réseau polymère formé est un RIP et non pas un semi-RIP.

Le polymère organique halogéné peut être choisi parmi tous les homopolymères et copolymères comportant des fonctions halogénées réactives vis-à-vis des fonctions amine tertiaire de la diamine. Les fonctions halogénées sont de préférence des groupes chlorés ou bromés, en particulier des groupes chloro-alkyle en $C_{1-6}$ ou bromoalkyle en $C_{1-6}$.

Par ailleurs, le polymère organique porteur de groupes halogénés réactifs est choisi de préférence parmi les homopolymères et copolymères à squelette polyéther. On peut citer à titre d'exemples de polymères particulièrement préférés les homopolymères d'épichlorhydrine et les copolymères d'épichlorhydrine et d'oxyde d'éthylène.

On peut citer à titre d'exemple de diamine tertaire (composant (b)) la tétraméthylène-diamine, le 1,4-diazobicyclo-[2,2,2]-octane (DABCO), le N-méthylimidazole, la bipyridine, la di-imidazoline et des mélanges de ceux-ci. La diamine tertiaire sert à la fois à réticuler le polymère organique halogéné et à introduire des charges positives indispensables à la conduction anionique du matériau polymère préparé. En effet, chaque fonction amine tertiaire sera convertie, après réaction avec une fonction chlorée, en ammonium quaternaire. Bien que le procédé revendiqué prévoie explicitement la réaction entre le polymère halogéné et une diamine tertiaire, il englobe également une variante où le polymère halogéné a été préalablement modifié par fixation de la diamine, laissant libre la deuxième fonction amine pour une réaction de réticulation ultérieure.

La présence de la diamine tertiaire est indispensable à la formation d'un réseau tridimensionnel réticulé. Pour obtenir un taux de réticulation satisfaisant, le rapport molaire diamine/groupements organiques halogénés est généralement compris entre 1 % et 80 %, de préférence entre 2 et 40 % et en particulier entre 10 et 30 %.

Il peut être utile d'introduire dans la solution réactionnelle (A) de départ, en plus de la diamine tertiaire indispensable à la réticulation, une monoamine tertiaire (composant (b')). La réaction de cette dernière avec le polymère organique halogéné permet d'augmenter la densité de charge du réseau cationique et donc sa conductivité anionique, sans pour autant modifier la densité de réticulation.

On peut citer à titre d'exemples de monoamines tertiaires utilisables dans la présente invention la triéthanolamine, la quinuclidine, le quinuclidinol et des mélanges de ceux-ci.

Le composant (c) du mélange réactionnel préparé à l'étape (A) peut en principe être n'importe quel monomère monoéthylénique polymérisable par voie radicalaire pour autant qu'il n'interfère pas avec la réaction de substitution nucléophile des composants (a) et (b). Ainsi, les monomères vinyliques mono- ou polychlorés, tels que le chlorure de vinyle ou le chlorure de vinylidène, sont inappropriés en tant que composant (c) car ils pourraient participer à une réaction de substitution nucléophile avec la diamine tertiaire et aboutir ainsi à la formation de liaisons covalentes entre les deux réseaux du RIP ou semi-RIP.

Les monomères (c) sont de préférence non chargés ou porteurs d'une charge cationique. L'utilisation de comonomères porteurs d'une charge anionique (tels que l'acide (méth)acrylique ou le styrène-sulfonate) perturberait en effet probablement le comportement de conduction ionique du matériau final obtenu et est par conséquent déconseillée.

On peut citer à titre d'exemples de monomères utilisables en tant que composant (c), les monomères suivants :

Acrylates et méthacrylates d'alkyle en $C_{1-10}$, acrylates et méthacrylates d'hydroxyalkyle en $C_{1-10}$, le styrène et ses dérivés, les acrylates et méthacrylate de polyéthylèneglycol, l'acétate de vinyle, la N-vinylpyrrolidone, l'acrylonitrile, le chlorure ou bromure de (vinylbenzyl)trialkyle en $C_{1-6}$-ammonium, le chlorure ou bromure de tri(alkyle en $C_{1-6}$) - vinyloxycarbonylalkyl-ammonium, et le chlorure ou bromure d'allyloxycarbonyl(alkyle en $C_{1-6}$)-tri(alkyle en $C_{1-6}$)-ammonium.

Parmi ceux-ci, on préfère en particulier les méthacrylates d'alkyle en $C_{1-4}$, les méthacrylates de polyéthylèneglycol, les méthacrylates d'hydroxyalkyle en $C_{1-4}$ et l'acétate de vinyle.

L'agent de réticulation (composant (d)) comportant au moins deux insaturations éthyléniques est facultatif dans le cas d'un semi-RIP, mais nécessairement présent lorsqu'on souhaite préparer un RIP. Il est choisi par exemple dans le groupe formé par le divinylbenzène, le di(méth)acrylate d'éthylèneglycol, le di(méth)acrylate de poly(oxyde d'éthylène)glycol et le di(méth)acrylate de bisphénol A. La notation « (méth)acrylate » utilisée ici englobe les acrylates, méthacrylates et combinaisons des deux.

Lorsqu'il est présent, l'agent de réticulation est de préférence utilisé à raison de 0,5 à 10 % en masse, de préférence 0,5 à 5 % en masse par rapport au monomère éthylénique monoinsaturé (composant (c)).

Dans une variante du procédé de l'invention, on peut remplacer le système monomère polymérisable (composant (c)) + agent de réticulation (composant (d)) par un composant, appelé par la suite composant (cd), qui joue le rôle des composants (c) et (d). Ledit composant (cd) est un polymère, ayant de préférence une masse molaire moyenne en nombre comprise entre 300 et 4000, comportant, de préférence à chacune de ses extrémités, une double liaison polymérisable par voie radicalaire. Lorsqu'un tel polymère à doubles liaisons polymérisables est mis en présence d'un amorceur radicalaire, les doubles liaisons polymérisent et conduisent à la réticulation du polymère et à la formation d'un réseau tridimensionnel. Le caractère plus ou moins lâche de ce réseau dépend de la masse moléculaire du polymère. Plus celle-ci est importante, moins le réseau obtenu sera réticulé.

La présente invention a par conséquent en outre pour objet un procédé tel que décrit ci-dessus dans lequel les composants (c) et (d), à l'étape (A), sont remplacés par ou associés à un polymère organique comportant au moins deux groupes à double liaison polymérisable (composant (cd)), situés de préférence à l'extrémité du polymère organique.

On peut citer à titre d'exemple d'un tel composant (cd) du diméthacrylate de polyéthylèneglycol.

On peut utiliser en tant qu'amorceur (composant (e)) en principe n'importe quel composé capable de se décomposer sous l'effet de la chaleur et/ou de la lumière en radicaux libres suffisamment stables pour amorcer la réaction de polymérisation. De tels amorceurs sont connus par l'homme du métier. On utilisera de préférence des amorceurs thermiques tels que les peroxydes, les composés diazoïques ou les persulfates. On peut citer à titre d'exemple de tels amorceurs thermiques le persulfate d'ammonium, le peroxyde d'hydrogène, le peroxyde de benzoyle (POB), l'azobisisobutyronitrile (AIBN), le peroxycarbonate de dicyclohexyle (PCDH).

Parmi ces derniers, le POB et l'AIBN sont particulièrement adaptés aux températures utilisées.

Lorsque l'amorceur est un photoamorceur, la polymérisation est mise en oeuvre sous un rayonnement d'une longueur d'onde et d'une intensité appropriées.

L'amorceur est utilisé de préférence en une quantité comprise entre 0,1 et 10 % en masse, de préférence entre 1 et 5 % en masse, rapportée à la masse totale des composants (c) et (d).

On peut citer à titre d'exemple de solvant organique approprié pour la préparation de la solution réactionnelle initiale contenant les composants (a) - (e) le diméthylformamide, l'éthanol, le diméthylsulfoxyde, le méthanol, l'acétone, le butanol, la butanone ou un mélange de ces solvants.

Pour obtenir, à la fin de l'étape (B), des matériaux polymère ayant une consistance appropriée, la solution réactionnelle initiale a de préférence une concentration globale en composants (a) - (e) comprise entre 10 et 80 % en poids, autrement dit, la proportion du solvant organique dans la solution initiale est de préférence comprise entre 90 et 20 % en poids.

Le rapport pondéral des composants (a) et (b), y compris (b'), formant le premier réseau tridimensionnel porteur de charges cationiques aux composants (c) - (e) formant le deuxième réseau tridimensionnel, qui est de préférence non chargé, peut varier entre des limites très larges, à condition que le matériau fini ait une conductivité suffisante pour l'application envisagée.

Généralement, le rapport pondéral des composants formant le premier réseau polymère cationique, aux composants formant le deuxième réseau polymère est compris entre 90/10 et 10/90, de préférence entre 80/20 et 15/85, et en particulier entre 60/40 et 25/75.

Au cours de l'étape (B) du procédé de l'invention la solution réactionnelle homogène contenant l'ensemble des réactifs (a) - (e), y compris éventuellement l'amine monofonctionnelle (composant b'), est chauffée à une température suffisante pour déclencher à la fois la réaction de substitution nucléophile entre les composants (a) et (b) et (b') éventuellement présent, et la décomposition de l'amorceur de polymérisation. Les deux réactions se déroulent ainsi de préférence parallèlement et simultanément et aboutissent à la formation d'un matériau RIP ou semi-RIP ayant une composition uniforme, constituée respectivement de deux réseaux polymères qui s'interpénètrent mutuellement ou d'un polymère, linéaire ou ramifié, enchevêtré dans un réseau de polymère réticulé.

Dans une variante, on peut envisager un système qui réagit en deux étapes, la formation d'un des deux réseaux étant activée à une température inférieure à la température d'activation de l'autre réseau de polymères.

La température de chauffage de l'étape (B) est de préférence comprise entre 30 et 130 °C, en particulier entre 35 et 100 °C et de manière encore plus préférentielle entre 50 et 80 °C. Cette température est maintenue généralement pendant une durée comprise entre 1 et 24 heures, de préférence entre 6 et 16 heures.

Comme expliqué en introduction, le matériau polymère de type RIP ou semi-RIP obtenu à la fin du procédé selon l'invention est utilisable dans une pile à combustible alcaline ou dans une pile ou un accumulateur métal-air en contact direct avec une électrode à air, soit en tant qu'électrolyte solide en remplacement de l'électrolyte alcalin liquide soit en tant que membrane de séparation solide conductrice d'anions, intercalée entre l'électrode à air et l'électrolyte liquide.

Dans les applications où il est important d'assurer une très bonne adhésion du matériau RIP ou semi-RIP de la présente invention à l'électrode à air, il peut être avantageux de mettre en oeuvre l'étape (B) en présence de l'électrode à air. Pour cela, la solution préparée à l'étape (A) est coulée en une fine couche sur l'électrode à air de manière à recouvrir de préférence totalement la face contenant la matière active de celle-ci et l'ensemble est soumis à l'étape de chauffage (B). Dans ce mode de réalisation, la solution peut pénétrer, sur une faible profondeur (généralement au plus égale à 5 % de l'épaisseur totale de l'électrode), à l'intérieur de la structure poreuse de l'électrode et polymériser/réticuler *in situ*, établissant ainsi un lien fort entre le matériau polymère réticulé final et l'électrode.

Une telle électrode à air composite, formée par une électrode à air connue et un matériau RIP ou semi-RIP conducteur d'anions polymérisé *in situ* à la surface de l'électrode à air est également un objet de la présente invention. Cette électrode composite est caractérisée par le fait que le matériau RIP ou semi-RIP s'étend dans une partie du réseau poreux de l'électrode à air pénétrant ce réseau poreux sur une profondeur au plus égale à 5 %, de préférence au plus égale à 2 % de la profondeur totale de l'électrode à air.

Mais il est également possible de mettre en oeuvre l'étape (B) en l'absence de l'électrode à air, par exemple en maintenant la solution entre deux plaques de support non poreuses ou par coulée suivie d'une évaporation. La Demanderesse a constaté que la fine membrane obtenue à l'issue de l'étape (B) pouvait alors être manipulée sans problèmes et être collée directement et facilement sur l'électrode à air, sans utilisation d'un adhésif (c'est-à-dire sans solution de membrane), par simple application d'une pression.

A la connaissance de la Demanderesse, le matériau obtenu à l'issu du procédé décrit ci-dessus n'a jusqu'ici jamais été synthétisé ou proposé en tant qu'électrolyte solide ou membrane conductrice d'anions dans des dispositifs électrochimiques. La présente invention a par conséquent également pour objet un matériau polymère échangeur d'anions ayant une structure de type réseau interpénétré de polymères (RIP) ou de type réseau semi-interpénétré de polymères (semi-RIP) susceptible d'être obtenu par le procédé tel que décrit ci-dessus.

Ce matériau a de préférence une densité de charge de 0,3 à 2 meq par gramme.

Sa conductivité ionique intrinsèque est de préférence supérieure à $10^{-6}$ S.cm$^{-1}$, généralement comprise entre $10^{-6}$ S.cm$^{-1}$ et 10 S.cm$^{-1}$, et en particulier entre $10^{-4}$ S.cm$^{-1}$ et $5.10^{-3}$ S.cm$^{-1}$.

Il s'agit d'un matériau relativement hydrophile qui gonfle lorsqu'il est mis en présence d'eau. Le taux de gonflement du matériau de la présente invention est toutefois considérablement plus faible que le taux de gonflement d'un matériau polymère réticulé selon l'état de la technique, préparé à partir des composants (a) et (b/b') uniquement (voir Exemple 3 ci-après). Le taux de gonflement du matériau polymère de la présente invention, tel que défini à l'exemple 3 de la présente demande, est de préférence compris entre 10 et 40 %, en particulier entre 12 et 30%.

La présente invention a en outre pour objet l'utilisation d'un matériau RIP ou semi-RIP échangeur d'anions tel que décrit ci-dessus en tant qu'électrolyte solide dans un dispositif électrochimique.

Comme indiqué en introduction, le matériau RIP échangeur d'anions de la présente invention est particulièrement utile dans des piles à combustible alcalines (*alcaline fuel cells,* AFC) utilisant des électrodes à air poreuses en contact avec l'électrolyte alcalin.

Dans une telle pile à combustible, le matériau RIP ou semi-RIP de la présente invention peut soit remplacer l'électrolyte liquide alcalin soit il peut être placé au niveau de l'interface électrode à air/électrolyte alcalin liquide. Dans ce dernier cas, il empêche ou réduit efficacement la diffusion du dioxyde de carbone contenu dans l'air vers l'électrolyte liquide et la carbonatation de celui-ci. Il réduit, voire supprime également le risque de noyage de la structure poreuse de l'électrode à air par l'électrolyte liquide. La durée de vie d'une pile à combustible contenant, à la place de l'électrolyte liquide ou en combinaison avec celui-ci, un matériau RIP ou semi-RIP conducteur d'anions en contact direct avec l'électrode à air est ainsi considérablement augmentée.

Dans un autre mode de réalisation de la présente invention, le matériau RIP ou semi-RIP est utilisé dans une pile ou un accumulateur air-métal, en contact direct avec l'électrode à air sous forme d'une membrane séparant l'électrode à air de l'électrolyte liquide.

On peut également envisager l'utilisation du matériau RIP ou semi-RIP de la présente invention en remplacement de l'électrolyte liquide dans tout accumulateur alcalin tel que NiMH ou NiOOH-Zn, NiOOH-Cd, AgO-Zn etc.

**Exemple 1**

Préparation d'un matériau RIP à base de polyépichlorhydrine réticulée et de poly(méthacrylate d'hydroxyéthyle) réticulé.

On prépare une solution éthanolique à 200 g/L d'un polymère d'épichlorhydrine (PECH) préalablement greffé avec 12 % en poids de 1,4-diazabicyclo[2,2,2]octane (DABCO). Dans 4 ml de cette solution, on dissout 0,9 g de méthacrylate d'hydroxyéthyle (HEMA), 0,1 g de diméthacrylate d'éthylèneglycol (agent de réticulation) et 0,05 g d'azobisbutyronitrile (AIBN, amorceur radicalaire). La solution est dégazée sous flux d'argon et sous agitation pendant 30 minutes à température ambiante. On place ensuite la solution dans un moule formé par deux plaques de verre (5cm x 5cm) séparées par un joint Téflon® de 1 mm d'épaisseur. Le moule rempli est placé dans un four à 60 °C pendant 16 heures. La membrane RIP obtenue après démoulage est homogène et transparente et présente une consistance permettant de la manipuler facilement.

Dans la membrane, le rapport pondéral du premier réseau polymère (PECH réticulée) au deuxième réseau polymère (PHEMA réticulé) est de 44/56 (= teneur en PECH de 44 %).

**Exemple 2**

On prépare de la manière décrite dans l'Exemple 1 des membranes RIP en faisant varier les proportions initiales des réactifs de manière à obtenir des teneurs en PECH de 10 %, 22 %, 30 %, 37,5 % en poids ainsi que deux membranes témoins contenant respectivement 0 % de PECH réticulée (c'est-à-dire contenant 100 % de polyméthacrylate d'hydroxyéthyle réticulé par du diméthacrylate de diéthylèneglycol, PHEMA-EGDMA) et 100 % de PECH réticulée par du DABCO.

**Exemple 3**

Détermination du taux de gonflement dans l'eau des membranes en fonction du temps d'immersion-Conductivité anionique

On immerge dans de l'eau distillée à 23 °C les membranes préparées à l'exemple 2 contenant respectivement 0 %, 10 %, 22 %, 37,5 % et 100 % de PECH réticulée.

A des intervalles réguliers, on retire la membrane de l'eau pour déterminer sa masse.

Le taux de gonflement est calculé selon la formule

$$T_g = (m_t - m_0) / m_0$$

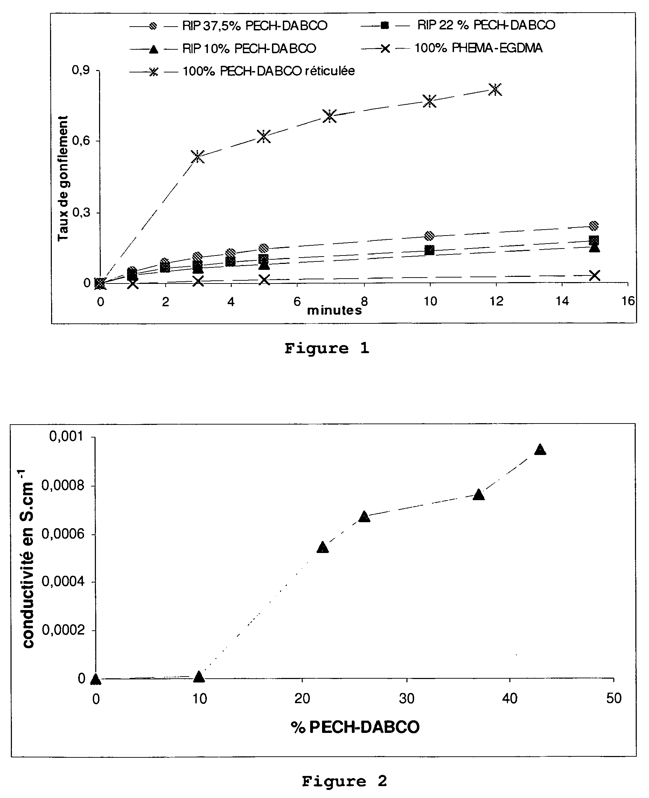

Les différentes courbes de taux de gonflement dans l'eau en fonction du temps sont représentées à la figure 1.

On observe que le taux de gonflement dans l'eau de la membrane témoin 100% PECH réticulée est d'environ 75 % au bout d'une dizaine de minutes, alors que celui de toutes les autres membranes est inférieur à 30 %. Le gonflement dans l'eau de la membrane 100 % PECH réticulée conduit à une fragilisation mécanique de la membrane. La membrane ne peut pas être manipulée et est inutilisable.

Les membranes RIP contenant 10 %, 22 % et 37,5 % de PECH et la membrane de PHEMA-EGDMA conservent leurs bonnes propriétés dimensionnelles et mécaniques. Leur taux de gonflement modéré, de l'ordre de 20 à 25 % en poids, fournit une quantité d'eau appropriée pour une bonne conduction anionique.

La Figure 2 représente la conductivité anionique dans l'eau, exprimée en S/cm, des membranes des exemples 1 et 2 en fonction du pourcentage de PECH réticulée. Cette figure montre qu'une teneur en PECH réticulée inférieure à 20 % en poids confère à la membrane RIP une conductivité anionique insuffisante. On peut toutefois s'attendre à ce que ce seuil soit d'autant plus bas que le rapport DABCO/PECH est élevé.

**Exemple 4**

Fabrication d'une électrode à air composite par polymérisation in situ et par polymérisation séparée

On applique manuellement une membrane d'une épaisseur de 100 $\mu$m, préparée de la manière décrite dans l'exemple 1 sur la surface d'une électrode à air située du côté de l'électrolyte. On constate que la membrane adhère parfaitement à la surface de l'électrode (Electrode Composite A).

On dépose à la surface d'une électrode à air identique une solution réactionnelle homogène dégazée préparée de la manière décrite à l'exemple 1. L'ensemble est placé pendant 12 heures dans un four thermostaté à 60 °C. On obtient une électrode à air composite portant, à sa surface, un dépôt de matériau RIP d'une épaisseur d'environ 60 μm (Electrode Composite B).

**Exemple 5**

Les deux électrodes à air composites de l'Exemple 4 sont montées chacune dans une cellule contenant une solution de LiOH à 2 mol.L$^{-1}$, avec une électrode de référence Hg/HgO et une contre-électrode en acier inoxydable pour les tests électrochimiques.

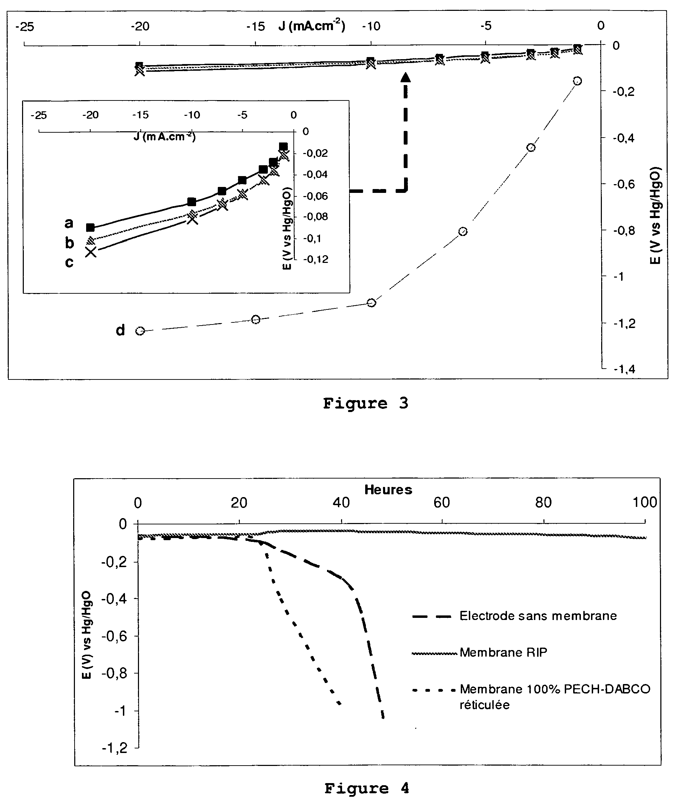

La Figure 3 montre les courbes de polarisation obtenues pour une telle cellule. La courbe (a) correspond à une cellule avec une électrode à air non modifiée, la courbe (b) à une cellule avec une Electrode Composite B (exemple 4), la courbe (c) à une cellule avec une Electrode Composite A (exemple 4) et la courbe (d) à une cellule avec une électrode couverte d'une membrane commerciale à base d'un réseau (non RIP) de PECH réticulée incorporé dans une structure poreuse inerte en polypropylène (membrane commercialisée par la société ERAS LABO).

On constate que la polarisation de l'électrode à air modifiée avec la membrane commerciale est très élevée et dépasse -1V pour une densité de courant de seulement -10 mA.cm$^{-2}$. L'utilisation d'une telle membrane dans les conditions décrites ci-dessus, c'est-à-dire mise en contact directement avec l'électrode à air en l'absence d'une solution de membrane, est donc impossible. A l'inverse, les polarisations constatées pour les électrodes à air composites selon la présente invention (courbes (b) et (c)) sont avantageusement presque identiques à celle de l'électrode à air nue. L'ajout de ces membranes sur l'électrode n'induit donc pas de chute de potentiel significative dans le dispositif à ces densités de courant. Le contact ionique entre les membranes RIP et l'électrode à air est satisfaisant en l'absence de toute solution de membrane.

**Exemple 6**

Stabilité en milieu alcalin des électrodes à air

On réalise des dispositifs de test électrochimique avec

  (i) une électrode à air non modifiée (nue)
  (ii) une électrode à air selon l'invention modifiée par un RIP (Electrode Composite A de l'exemple 4)
  (iii) une électrode à air comparative, modifiée par une membrane 100 % PECH-DABCO

La membrane 100 % PECH-DABCO (épaisseur 100 μm) est préparée par chauffage d'une solution de PECH-DABCO (100 g/L dans un mélange éthanol/butanone (80/20)) pendant 12 heures à 60 °C.

Les mesures de polarisation sont réalisées par rapport à une électrode Hg/HgO avec une densité de courant de -10 mA.cm$^{-2}$. Avant le début de la décharge, les électrodes modifiées sont équilibrées pendant 2 heures dans la cellule électrochimique décrite précédemment contenant du LiOH à 2 mol.L$^{-1}$.

La Figure 4 montre l'évolution de la polarisation en décharge des électrodes à air (i), (ii) et (iii) décrites précédemment.

L'électrode à air (ii) selon l'invention résiste pendant plus de 100 heures en décharge dans la lithine alors que la durée de vie des deux électrodes comparatives (i) et (iii) ne dépasse pas 20 à 30 heures.

Des résultats similaires sont obtenus avec une solution saturée de lithine.

**Exemple 7**

Synthèse d'une membrane RIP selon l'invention associant un réseau PECH réticulé et un réseau à base d'un composant (cd)

On dissout 0,95 g de diméthacrylate de polyéthylèneglycol (PEGDMA, Mn = 750 g.mol$^{-1}$) et 0,047 g d'AIBN dans 4 mL d'une solution de polyépichlorhydrine modifiée par 12 % de DABCO (100 g.L$^{-1}$). La solution est dégazée sous flux d'argon et sous agitation pendant 30 minutes à température ambiante. On place ensuite la solution dans un moule formé par deux plaques de verre (5cm x 5cm) séparées par un joint Teflon® de 1 mm d'épaisseur. Le moule rempli est placé dans un four à 60 °C pendant 16 heures. La membrane RIP obtenue après moulage est homogène et transparente et peut être manipulée facilement.

Le rapport pondéral PEGDMA/PECH réticulée du matériau RIP est de 71/29.

Les résultats de l'analyse thermomécanique dynamique du matériau RIP ainsi obtenu sont représentés

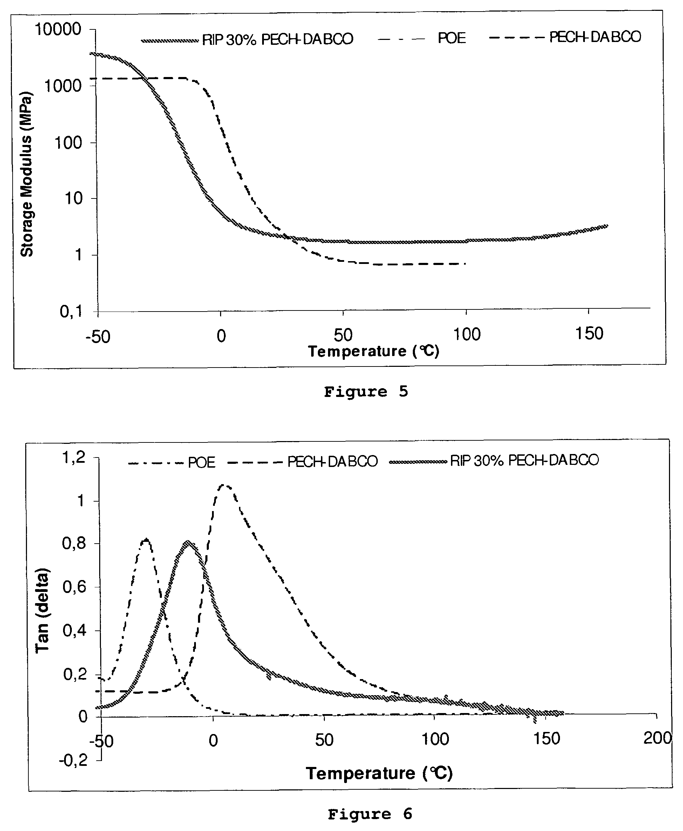

- à la Figure 5 qui montre l'évolution des modules de conservation de la membrane RIP et des réseaux simples correspondants (synthétisés séparément), et
- à la Figure 6 qui présente les courbes tan δ (tan δ = module de perte/module de conservation) correspondantes en fonction de la température.

On observe une seule relaxation mécanique pour la membrane RIP. Le module du plateau caoutchoutique dans le RIP (1,5 MPa) est très proche de celui du réseau simple PECH réticulé (0,6 MPa). Ainsi, le réseau PECH forme une phase continue dans la membrane RIP ce qui est en accord avec la valeur assez élevée de la conductivité anionique, mesurée pour cette membrane comme étant égale à $10^{-3}$ S.cm$^{-1}$ à la température ambiante.

On peut déduire des résultats de l'analyse thermomécanique que les réseaux PEGDMA et PECH s'interpénètrent de manière correcte, car la courbe tan δ en fonction de la température présente une seule relaxation mécanique caractérisée par un seul pic, intermédiaire positionné entre les deux pic observés pour chacun des réseaux simples correspondants.

**Exemple 8**

On prépare de la manière décrite dans l'exemple 7 une série de réseaux RIP à base de PECH réticulé et de diméthacrylate de polyéthylèneglycol (PEGDMA - Mn = 750 g.mol$^{-1}$) en faisant varier la teneur en PECH réticulée de 10 à 29 % en poids (= 90 à 71 % de PEGDMA).

Toutes ces membranes ont une tenue mécanique satisfaisante qui permet de les manipuler facilement et il est possible de les positionner sur l'électrode selon l'exemple 4 (Electrode Composite A). Toutefois, cet assemblage présente une polarisation très élevée. Pour diminuer cette polarisation, il est nécessaire d'utiliser une solution de membrane placée entre l'électrode et la membrane RIP. Une étude de stabilité de l'électrode composite A ainsi réalisée, similaire à celle décrite dans l'Exemple 6, montre que cette électrode composite A a une courbe de stabilité identique à celle d'une électrode modifiée avec une membrane 100 % de PECH-DABCO ((iii) dans Exemple 6).

**Exemple 9**

Influence de la masse moléculaire du composant (cd)

On prépare de la manière décrite dans l'exemple 8 des membranes RIP en utilisant, à la place du PEGDMA de $M_n$ égale à 750 g.mol$^{-1}$, un PEGDMA de $M_n$ égale à 330 g.mol$^{-1}$ est à 550 g.mol$^{-1}$. La diminution de la masse molaire du PEGDMA permet d'augmenter la densité de réticulation du réseau correspondant. Les membranes sont alors plus rigides et leur taux de gonflement dans la lithine diminue. Ces modifications n'ont toutefois pas permis d'augmenter la durée de vie d'une l'électrode composite A contenant une telle membrane.

**Revendications**

1. Procédé de fabrication d'un matériau polymère échangeur d'anions ayant une structure de type réseau interpénétré de polymères (RIP) ou de type réseau semi-interpénétré de polymères (semi-RIP), ledit procédé comprenant les étapes successives suivantes :

(A) préparation d'une solution réactive homogène comprenant, dans un solvant organique approprié,

    (a) au moins un polymère organique porteur de groupes halogénés réactifs,
    (b) au moins une diamine tertiaire,
    (c) au moins un monomère comportant une insaturation éthylénique polymérisable par polymérisation radicalaire, et
    (d) éventuellement au moins un agent de réticulation comportant au moins deux insaturations éthyléniques polymérisables par polymérisation radicalaire, et
    (e) au moins un amorceur de polymérisation radicalaire,

(B) chauffage de la solution préparée à l'étape (A) jusqu'à une température et pendant une durée suffisantes pour permettre à la fois une réaction de substitution nucléophile entre les composants (a) et (b) et une réaction de copolymérisation radicalaire des composants (c) et éventuellement (d) amorcée par le composant (e).

2. Procédé selon la revendication 1, **caractérisé par le fait que** la solution réactionnelle préparée à l'étape (A) comprend en outre une monoamine tertiaire (composant (b')).

3. Procédé selon la revendication 1 ou 2, **caractérisé par le fait que** le polymère organique porteur de groupes halogénés réactifs est choisi parmi les homopolymères et copolymères à squelette polyéther.

4. Procédé selon la revendication 3, **caractérisé par le fait que** le polymère organique porteur de groupes halogénés réactifs est choisi parmi les homopolymères et copolymères d'épichlorhydrine.

5. Procédé selon l'une quelconque des revendications précédentes, **caractérisé par le fait que** la diamine tertiaire est choisie dans le groupe constitué de la tétraméthylènediamine, le 1,4-diazabicyclo-[2,2,2]-octane, le N-méthylimidazole, la bipyridine, la diimidazoline et les mélanges de ceux-ci.

6. Procédé selon la revendication la revendication 2, **caractérisé par le fait que** la monoamine tertiaire est choisie dans le groupe constitué de la triéthanolamine, la quinuclidine, le quinuclidinol et les mélanges de ceux-ci.

7. Procédé selon l'une quelconque des revendications précédentes, **caractérisé par le fait que** la température de chauffage de l'étape (B) est comprise entre 30 et 130 °C.

**8.** Procédé selon l'une quelconque des revendications précédentes, **caractérisé par le fait que** la durée de chauffage de l'étape (B) est comprise entre 1 et 24 heures.

**9.** Procédé selon l'une quelconque des revendications précédentes, **caractérisé par le fait que** le monomère comportant une insaturation éthylénique est choisi dans le groupe formé par les acrylates et méthacrylates d'alkyle en $C_{1-10}$, acrylates et méthacrylates d'hydroxyalkyle en $C_{1-10}$, le styrène et ses dérivés, les acrylates et méthacrylate de polyéthylèneglycol, l'acétate de vinyle, la N-vinylpyrrolidone, l'acrylonitrile, le chlorure ou bromure de (vinylbenzyl) trialkyle en $C_{1-6}$-ammonium, le chlorure ou bromure de tri(alkyle en $C_{1-6}$)-vinyloxycarbonylalkyl-ammonium, et le chlorure ou bromure d'allyloxycarbonyl(alkyle en $C_{1-6}$)-tri(alkyle en $C_{1-6}$)-ammonium.

**10.** Procédé selon l'une quelconque des revendications précédentes, **caractérisé par le fait que** l'agent de réticulation comportant au moins deux insaturations éthyléniques est choisi parmi le divinylbenzène, le di(méth)acrylate d'éthylène-glycol, le di(méth)acrylate de poly(oxyde d'éthylène)glycol et le di(méth)acrylate de bisphénol A.

**11.** Procédé selon l'une quelconque des revendications 1 - 8, **caractérisé par le fait que** les composants (c) et (d) sont remplacés par ou associés à un polymère organique comportant au moins deux groupes à double liaison polymérisable (composant (cd)).

**12.** Matériau polymère échangeur d'anions ayant une structure de type réseau interpénétré de polymères (RIP) ou de type réseau semi-interpénétré de polymères (semi-RIP) susceptible d'être obtenu par le procédé selon l'une quelconque des revendications précédentes.

**13.** Electrode à air composite, formée par une électrode à air et un matériau RIP ou un matériau semi-RIP conducteur d'anions selon la revendication 12 polymérisé *in situ* à la surface de l'électrode à air le matériau RIP ou semi-RIP s'étendant dans une partie du réseau poreux de l'électrode à air et pénétrant ce réseau poreux sur une profondeur au plus égale à 5 % de la profondeur totale de l'électrode à air.

**14.** Utilisation d'un matériau polymère échangeur d'anions selon la revendication 12, en tant qu'électrolyte solide dans un dispositif électrochimique.

**15.** Pile à combustible alcaline, comprenant une cathode, une anode et un électrolyte solide disposé entre l'anode et la cathode, **caractérisée par le fait que** l'électrolyte solide est un matériau polymère échangeur d'anions de type réseau interpénétré de polymères selon la revendication 12.

**16.** Pile à combustible alcaline selon la revendication 15, **caractérisée par le fait que** la cathode est une électrode à air.

**17.** Pile ou accumulateur air-métal contenant une électrode à air, une deuxième électrode de polarité opposée à l'électrode à air et un électrolyte liquide à base d'une solution aqueuse concentrée d'hydroxyde alcalin, **caractérisé par le fait que** l'électrode à air est couverte, sur au moins une partie de sa surface en contact avec l'électrolyte liquide, par un matériau polymère selon la revendication 12.

**Patentansprüche**

**1.** Verfahren zur Herstellung eines Anionenaustauscher-Polymermaterials mit einer Struktur vom Typ interpenetrierendes Polymernetzwerk (IPN) oder semi-interpenetrierendes Polymernetzwerk (Semi-IPN), wobei das Verfahren die folgenden aufeinanderfolgenden Schritte umfasst:

(A) Herstellen einer homogenen Reaktionslösung, die in einem geeigneten organischen Lösungsmittel

(a) mindestens ein organisches Polymer mit reaktiven halogenierten Gruppen,
(b) mindestens ein tertiäres Diamin,
(c) mindestens ein Monomer mit einer durch Radikalpolymerisation polymerisierbaren ethylenischen Ungesättigtheit und
(d) gegebenenfalls mindestens ein Vernetzungsmittel mit mindestens zwei durch Radikalpolymerisation polymerisierbaren ethylenischen Ungesättigtheiten und
(e) mindestens einen Radikalpolymerisationsinitiator

umfasst,
(B) Erhitzen der in Schritt (A) hergestellten Lösung auf eine ausreichende Temperatur und über eine ausreichende Dauer, dass sowohl eine nukleophile Substitutionsreaktion zwischen den Komponenten (a) und (b) als auch eine durch die Komponente (e) initiierte Radikalcopolymerisationsreaktion der Komponenten (c) und gegebenenfalls (d) ablaufen kann.

**2.** Verfahren nach Anspruch 1, **dadurch gekennzeichnet, dass** die in Schritt (A) hergestellte Reaktionslösung außerdem ein tertiäres Monoamin (Komponente (b')) umfasst.

**3.** Verfahren nach Anspruch 1 oder 2, **dadurch ge-**

**kennzeichnet, dass** das organische Polymer mit reaktiven halogenierten Gruppen aus Homopolymeren und Copolymeren mit einem Polyethergerüst ausgewählt wird.

4.  Verfahren nach Anspruch 3, **dadurch gekennzeichnet, dass** das organische Polymer mit reaktiven halogenierten Gruppen aus Homopolymeren und Copolymeren von Epichlorhydrin ausgewählt wird.

5.  Verfahren nach einem der vorhergehenden Ansprüche, **dadurch gekennzeichnet, dass** das tertiäre Diamin aus der Gruppe bestehend aus Tetramethylendiamin, 1,4-Diazobicyclo[2,2,2]octan, N-Methylimidazol, Bipyridin, Diimidazolin und Mischungen davon ausgewählt wird.

6.  Verfahren nach Anspruch 2, **dadurch gekennzeichnet, dass** das tertiäre Monoamin aus der Gruppe bestehend aus Triethanolamin, Chinuclidin, Chinuclidinol und Mischungen davon ausgewählt wird.

7.  Verfahren nach einem der vorhergehenden Ansprüche, **dadurch gekennzeichnet, dass** die Temperatur des Erhitzens von Schritt (B) zwischen 30 und 130°C liegt.

8.  Verfahren nach einem der vorhergehenden Ansprüche, **dadurch gekennzeichnet, dass** die Dauer des Erhitzens von Schritt (B) zwischen 1 und 24 Stunden liegt.

9.  Verfahren nach einem der vorhergehenden Ansprüche, **dadurch gekennzeichnet, dass** das Monomer mit einer ethylenischen Ungesättigtheit aus der Gruppe bestehend aus $C_{1-10}$-Alkylacrylaten und -methacrylaten, $C_{1-10}$-Hydroxyalkylacrylaten und -methacrylaten, Styrol und Derivaten davon, Polyethylenglykolacrylaten und -methacrylaten, Vinylacetat, N-Vinylpyrrolidon, Acrylnitril, (Vinylbenzyl)tri($C_{1-6}$-alkyl)ammoniumchlorid oder -bromid, Tri($C_{1-6}$-alkyl)vinyloxycarbonylalkyl-ammoniumchlorid oder -bromid und Allyloxycarbonyl($C_{1-6}$-alkyl)tri($C_{1-6}$-alkyl) ammoniumchlorid oder -bromid ausgewählt wird.

10.  Verfahren nach einem der vorhergehenden Ansprüche, **dadurch gekennzeichnet, dass** das Vernetzungsmittel mit mindestens zwei ethylenischen Ungesättigtheiten aus Divinylbenzol, Ethylenglykoldi(meth)-acrylat, Poly(ethylenoxid)glykoldi(meth)acrylat und Bisphenol-A-di(meth)acrylat ausgewählt ist.

11.  Verfahren nach einem der Ansprüche 1-8, **dadurch gekennzeichnet, dass** die Komponenten (c) und (d) durch ein organisches Polymer mit mindestens zwei Gruppen mit einer polymerisierbaren Doppelbindung (Komponente (cd)) ersetzt oder kombiniert werden.

12.  Anionenaustauscher-Polymermaterial mit einer Struktur vom Typ interpenetrierendes Polymernetzwerk (IPN) oder semi-interpenetrierendes Polymernetzwerk (Semi-IPN), das durch das Verfahren gemäß einem der vorhergehenden Ansprüche erhältlich ist.

13.  Verbundluftelektrode, gebildet aus einer Luftelektrode und einem an der Oberfläche der Luftelektrode in situ polymerisierten anionenleitenden IPN-Material oder Semi-IPN-Material gemäß Anspruch 12, wobei sich das IPN-Material oder Semi-IPN-Material in einen Teil des porösen Netzwerks der Luftelektrode erstreckt und dieses poröse Netzwerk bis zu einer Tiefe von höchstens 5% der Gesamttiefe der Luftelektrode penetriert.

14.  Verwendung eines Anionenaustauscher-Polymermaterials gemäß Anspruch 12 als Festelektrolyt in einer elektrochemischen Vorrichtung.

15.  Alkalische Brennstoffzelle mit einer Kathode, einer Anode und einem zwischen der Anode und der Kathode angeordneten Festelektrolyt, **dadurch gekennzeichnet, dass** es sich bei dem Festelektrolyt um ein Anionenaustauscher-Polymermaterial vom Typ interpenetrierendes Polymernetzwerk gemäß Anspruch 12 handelt.

16.  Alkalische Brennstoffzelle nach Anspruch 15, **dadurch gekennzeichnet, dass** es sich bei der Kathode um eine Luftelektrode handelt.

17.  Luft-Metall-Zelle oder -Batterie mit einer Luftelektrode, einer zweiten Elektrode mit der Luftelektrode entgegengesetzter Polarität und einem Flüssigelektrolyt auf Basis einer konzentrierten wässrigen Alkalimetallhydroxidlösung, **dadurch gekennzeichnet, dass** die Luftelektrode auf mindestens einem Teil ihrer mit dem Flüssigelektrolyt in Kontakt stehenden Oberfläche durch ein Polymermaterial gemäß Anspruch 12 bedeckt ist.

**Claims**

1.  A method for preparing an anion-exchange polymer material having an interpenetrating polymer network (IPN) or semi-interpenetrating polymer network (semi-IPN) structure, said method comprising the following successive steps:

    (A) preparing a homogeneous reaction solution comprising, in a suitable organic solvent,

(a) at least one organic polymer bearing reactive halogenated groups,

(b) at least one tertiary diamine,

(c) at least one monomer comprising an ethylenic unsaturation polymerizable by radical polymerization, and

(d) optionally, at least one crosslinking agent comprising at least two ethylenic unsaturations polymerizable by radical polymerization, and

(e) at least one radical polymerization initiator,

(B) heating the solution prepared in step (A) to a temperature and for a duration that are sufficient to allow both a nucleophilic substitution reaction between components (a) and (b) and a radical copolymerization reaction of components (c) and optionally (d), initiated by component (e).

2. The method as claimed in claim 1, **characterized in that** the reaction solution prepared in step (A) also comprises a tertiary monoamine (component (b')).

3. The method as claimed in claim 1 or 2, **characterized in that** the organic polymer bearing reactive halogenated groups is chosen from homopolymers and copolymers with a polyether backbone.

4. The method as claimed in claim 3, **characterized in that** the organic polymer bearing reactive halogenated groups is chosen from epichlorohydrin homopolymers and copolymers.

5. The method as claimed in any one of the preceding claims, **characterized in that** the tertiary diamine is chosen from the group consisting of tetramethylenediamine, 1,4-diazobicyclo[2,2,2]octane, N-methylimidazole, bipyridine, diimidazoline and mixtures thereof.

6. The method as claimed in claim 2, **characterized in that** the tertiary monoamine is chosen from the group consisting of triethanolamine, quinuclidine, quinuclidinol and mixtures thereof.

7. The method as claimed in any one of the preceding claims, **characterized in that** the heating temperature of step (B) is comprised between 30 and 130°C.

8. The method as claimed in any one of the preceding claims, **characterized in that** the heating duration of step (B) is between comprised 1 and 24 hours.

9. The method as claimed in any one of the preceding claims, **characterized in that** the monomer comprising an ethylenic unsaturation is chosen from the group made up of $C_{1-10}$ alkyl acrylates and methacrylates, $C_{1-10}$ hydroxyalkyl acrylates and methacrylates, styrene and its derivatives, polyethylene glycol acrylates and methacrylates, vinyl acetate, N-vinylpyrrolidone, acrylonitrile, (vinylbenzyl)tri($C_{1-6}$ alkyl)ammonium chloride or bromide, tri($C_{1-6}$ alkyl)vinyloxycarbonylalkyl-ammonium chloride or bromide, and allyloxycarbonyl ($C_{1-6}$ alkyl) tri ($C_{1-6}$ alkyl) ammonium chloride or bromide.

10. The method as claimed in any one of the preceding claims, **characterized in that** the crosslinking agent comprising at least two ethylenic unsaturations is chosen from divinylbenzene, ethylene glycol di(meth)acrylate, poly(ethylene oxide) glycol di(meth)acrylate and bisphenol A di(meth)acrylate.

11. The method as claimed in any one of claims 1-8, **characterized in that** components (c) and (d) are replaced with or combined with an organic polymer comprising at least two groups comprising a polymerizable double bond (component (cd)), preferably located at the end of the organic polymer.

12. An anion-exchange polymer material having an interpenetrating polymer network (IPN) or semi-interpenetrating polymer network (semi-IPN) structure obtainable by means of the method as claimed in any one of the preceding claims.

13. A composite air electrode, made up of an air electrode and an anion-conducting IPN material or semi-IPN material polymerized *in situ* at the surface of the air electrode or semi-IPN material extending into a part of the porous network of the air electrode and penetrating this porous network to a depth at most equal to 5% of the total depth of the air electrode.

14. The use of an anion-exchange polymer material according to claim 12, as a solid electrolyte in an electrochemical device.

15. An alkaline fuel cell, comprising a cathode, an anode and a solid electrolyte placed between the anode and the cathode, **characterized in that** the solid electrolyte is an anion-exchange polymer material of interpenetrating polymer network type according to claim 12.

16. The alkaline fuel cell according to claim 15, **characterized in that** the cathode is an air electrode.

17. An air-metal cell or battery containing an air electrode, a second electrode of opposite polarity to the air electrode and a liquid electrolyte based on a concentrated aqueous solution of alkaline hydroxide, **characterized in that** the air electrode is covered, over at least a part of its surface, preferably over its entire surface in contact with the liquid electrolyte, with a polymer material according to claim 12.

Figure 1

Figure 2

**Figure 3**

**Figure 4**

Figure 5

Figure 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006016068 A

**Littérature non-brevet citée dans la description**

- **G.F. MCLEAN et al.** An assessment of alkaline fuel cell technology. *International Journal of Hydrogen Energy,* 2002, vol. 27, 507-526

- IUPAC Compendium of Chemical Terminology. 1997